# EUROPÄISCHE PATENTANMELDUNG

(11) **EP 0 736 254 A1**
(43) Veröffentlichungstag der Anmeldung: **09.10.1996**
(21) Anmeldenummer: 95250295.3
(22) Anmeldetag: 29.11.1995
(51) Int. Cl.: A22C 7/00

(54) **Verfahren und Vorrichtung zur Herstellung von Döner**

(30) Priorität: 04.04.1995 DE 19513636
(71) Anmelder: Tasyumruk, Halil Ibrahim, D-12049 Berlin (DE)
(72) Erfinder: Tasyumruk, Halil Ibrahim, D-12049 Berlin (DE); Korkmaz, Feridun, Dr.-Ing., D-13355 Berlin (DE)
(74) Vertreter: Wablat, Wolfgang, Dr.Dr.

(57) **Zusammenfassung**

Die Erfindung betrifft ein Verfahren und eine Vorrichtung zur Herstellung von aus Scheibenfleisch und Hackfleischschichten bestehenden Döner. Aufgabe der vorliegenden Erfindung ist es, die manuelle Arbeit bei der Herstellung von Döner auf ein Minimum zu reduzieren und dabei gleichzeitig die Einhaltung der erforderlichen Hygiene sicherzustellen. Diese Aufgabe wird durch die erfindungsgemäße Vorrichtung gelöst, welche eine Positioniereinrichtung (1) mit mindestens zwei, die Döner durchdringenden Spießen (4, 5), eine Auflegeeinrichtung (6) zum Auflegen des Scheibenfleisches (23) und eine Auftragseinrichtung (7) zum Auftragen der Hackfleischschichten (24) aufweist, wobei die Spieße (4, 5) wechselweise mittels der Positioniereinrichtung (1) von der Auflegeeinrichtung (6) zur Auftragseinrichtung (7) und umgekehrt bewegbar sind. Das erfindungsgemäße Verfahren ist durch folgende Schritte gekennzeichnet: a) Auflegen einer oder mehrerer Lagen Scheibenfleisch (23) an einem ersten Spieß (4) mittels einer Auflegeeinrichtung (6), b) Positionieren des Spießes (4) an einer Auftragseinrichtung (7) zum Auftragen von Hackfleisch, c) Auftragen einer oder mehrerer Hackfleischschichten (24) mittels der Auftragseinrichtung (7) unter Drehung des Spießes (4 oder 5), d) Auflegen einer oder mehrerer Lagen Scheibenfleisch (23) an einem zweiten Spieß (4 oder 5) mittels der Auflegeeinrichtung (6), e) abwechselndes Positionieren der Spieße (4 und 5) an der Auflegeeinrichtung (6) beziehungsweise an der Auftragseinrichtung (7), und f) Wiederholen der Schritte a) beziehungsweise c) bis zur Fertigstellung je eines Döners auf jedem der Spieße (4 und 5).

## Beschreibung

Die Erfindung betrifft ein Verfahren und eine Vorrichtung zur Herstellung von aus Scheibenfleisch und Hackfleischschichten bestehenden Döner.

Die Herstellung von Döner erfolgt bislang in Handarbeit. Dabei wird eine bestimmte Menge Hackfleisch manuell in eine Fladenform geknetet und anschließend auf einen Spieß aufgesteckt. Danach wird von einem Scheibenfleischkörper eine Scheibe desselben abgeschnitten und auf die zuvor auf den Spieß aufgesteckte Hackfleischschicht aufgelegt.

Diese übliche Herstellungsweise hat mehrere Nachteile. Zum einen ist die Produktivität bei manueller Herstellung limitiert. Zum anderen läßt sich keine Standardqualität erzielen. Darüber hinaus ist es bei der manuellen Herstellung schwierig, die gesetzlichen Auflagen hinsichtlich der erforderlichen Hygiene sowie der Quoten an Hackfleisch bzw. Scheibenfleisch einzuhalten.

Aufgabe der vorliegenden Erfindung ist es, die vorgenannten Nachteile zu überwinden. Dieses Problem wird erfindungsgemäß durch eine Vorrichtung gelöst, die eine Positioniereinrichtung mit mindestens zwei, die Döner durchdringenden Spießen, eine Auflegeeinrichtung zum Auflegen des Scheibenfleisches und eine Auftragseinrichtung zum Auftragen der Hackfleischschichten aufweist, wobei die Spieße wechselweise mittels der Positioniereinrichtung von der Auflegeeinrichtung zur Auftragseinrichtung und umgekehrt bewegbar sind.

Mit der erfindungsgemäßen Vorrichtung läßt sich sowohl eine deutliche Produktivitätssteigerung als auch eine hohe Standardqualität erzielen. Außerdem können hiermit die gesetzlichen Hygieneauflagen sowie die vorgeschriebenen Quoten an Hack- und Scheibenfleisch sicher eingehalten werden.

Eine vorteilhafte Ausgestaltung der erfindungsgemäßen Lösung besteht darin, daß die Positioniereinrichtung ein Drehtisch ist, der mindestens zwei im wesentlichen vertikal und um 180° bezogen auf die Drehachse des Drehtisches versetzt angeordnete Spieße trägt. Diese Ausgestaltung führt zu einer vergleichsweise einfach aufgebauten und kostengünstig herstellbaren Vorrichtung.

Eine bevorzugte Ausgestaltung besteht ferner darin, daß die Auftragseinrichtung mit mindestens einer höhenverstellbaren Austragsdüse ausgestattet ist, die über eine elastische Leitung mit einer Förderschnecke verbindbar ist, und daß mindestens ein Drehantrieb zum Drehen des an der Auftragseinrichtung positionierten Spießes samt Döner vorgesehen ist.

Eine andere vorteilhafte Ausgestaltung ist dadurch gekennzeichnet, daß die Auftragseinrichtung mit einer höhenverstellbaren, auf dem aufgetragenen Hackfleisch abrollbaren Andruckrolle versehen ist. Hierdurch läßt sich die aufgetragene Hackfleischschicht weitgehend egalisieren und zugleich verdichten, so daß eine besonders hohe Standardqualität erzielt wird.

Nach einer weiteren vorteilhaften Ausgestaltung ist die Andruckkraft der Andruckrolle einstellbar. Die Andruckkraft der Andruckrolle kann somit in Abhängigkeit der jeweils erreichten Höhe des in der Herstellung befindlichen Döners und der daraus resultierenden Last auf untere Hackfleischschichten soweit reduziert werden, daß ein seitliches Wegfließen der Hackfleischschichten vermieden wird.

Eine andere vorteilhafte Ausgestaltung der erfindungsgemäßen Lösung besteht darin, daß an der Auftragseinrichtung ein höhenverstellbares, mit dem dort positionierten Spieß koppelbares Gegenlager vorgesehen ist. Hierdurch wird eine Stabilisierung erzielt, die ein Taumeln des entsprechenden Spießes bei dessen Drehung verhindert.

Eine weitere vorteilhafte Ausgestaltung besteht darin, daß die Öffnung der Austragsdüse bzw. -düsen durch Stellglieder teilweise oder vollständig verschließbar ist. Auf diese Weise läßt sich beim Drehen des an der Auftragseinrichtung positionierten Spießes eine relativ gleichmäßige Schichtdicke über den Radius des entstehenden Döners erzielen.

Eine weitere vorteilhafte Ausgestaltung der erfindungsgemäßen Lösung ist dadurch gekennzeichnet, daß die Spieße an der Positioniereinrichtung jeweils in ein drehbares Befestigungselement einsetzbar sind, das mit einem Gewichtssensor zur Erfassung des Dönergewichts gekoppelt ist. Diese Ausgestaltung ermöglicht es, insbesondere im Rahmen einer Automatisierung, ein Standardprodukt bestimmten Gewichts herzustellen.

Im Hinblick auf eine Automatisierung kann ferner eine Regelung vorgesehen sein, welche die Drehgeschwindigkeit der Spieße, die Umdrehungszahl der Spieße, den Hackfleischmassenstrom und/oder die Andruckkraft der Andruckrolle mit vorgebbaren Soll-Werten vergleicht und bei einer Abweichung den Soll-Werten anpaßt.

Weitere bevorzugte Ausgestaltungen der erfindungsgemäßen Lösungen sind in den Unteransprüchen gekennzeichnet.

Im folgenden wird die Erfindung anhand eines Ausführungsbeispiels und mit Bezug auf die beiliegenden Zeichnungen näher erläutert, wobei
- Fig. 1: eine Seitenansicht einer schematisch dargestellten erfindungsgemäßen Vorrichtung zeigt, die einen Drehtisch mit zwei darin einsetzbaren Spießen, eine Auftragseinrichtung und eine gegenüberliegende Auflegeeinrichtung aufweist, und
- Fig. 2: eine Draufsicht auf die schematisch dargestellte Vorrichtung gemäß Fig. 1 zeigt.

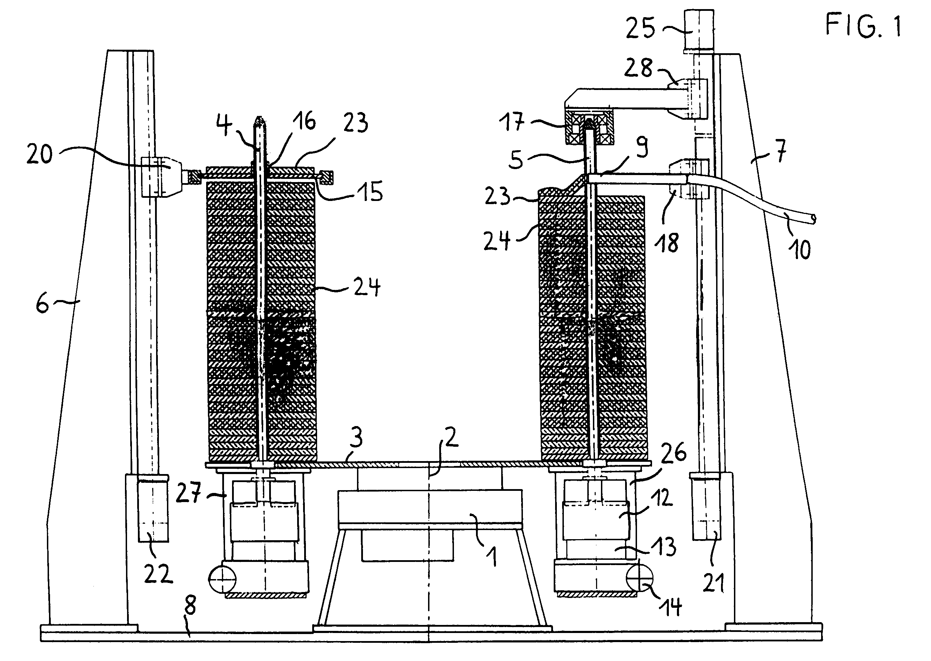

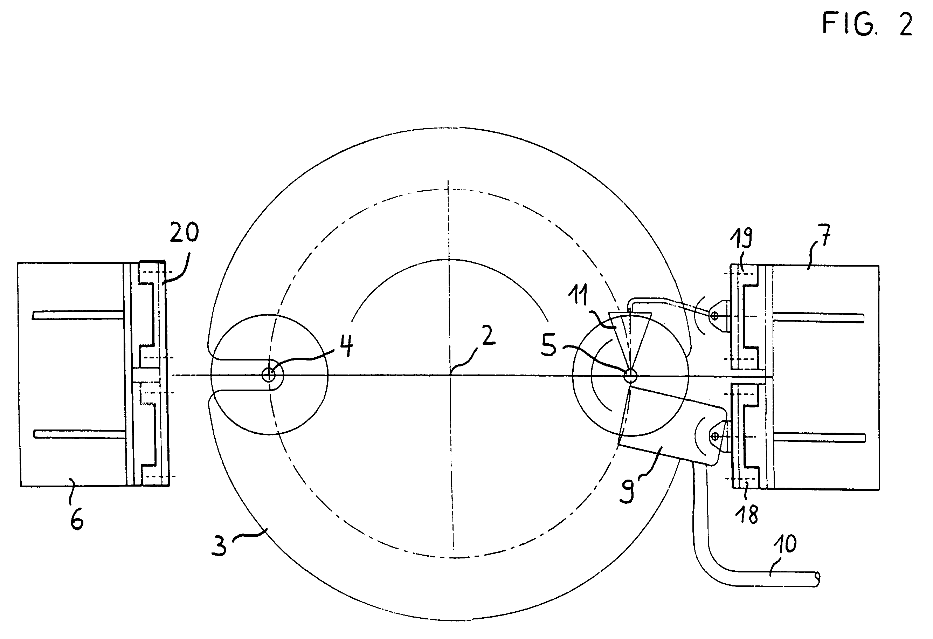

Die in den Figuren 1 und 2 dargestellte Vorrichtung besteht aus einem Drehtisch 1, der auf einer Grundplatte 8 befestigt ist und eine drehbare kreisförmige Platte 3 aufweist. Die Platte 3 ist mit zwei gegenüberliegenden Ausnehmungen versehen. An diesen Ausnehmungen sind an der Unterseite der Platte 3 Halterungen 26 und 27 montiert, in denen die Spieße 4 bzw. 5 drehbar gelagert sind. Die Halterungen 26 und 27 sind jeweils mit einem Befestigungselement in Form eines 3-Backen-Futtergreifers ausgestattet, der mit einem Drehantrieb in Form eines Schneckenantriebes 14 gekoppelt ist. Darüber hinaus sind in den Halterungen 26 und 27 Gewichtssensoren 13 angeordnet, durch die das jeweilige Gewicht der in der Herstellung befindlichen Döner kontinuierlich erfaßbar ist.

Die dargestellte Vorrichtung besteht weiter aus einer Auflegeeinrichtung 6 sowie einer Auftragseinrichtung 7, die ebenfalls auf der Grundplatte 8 montiert und entsprechend den Spießen 4 und 5 um 180° bezogen auf die Drehachse 2 des Drehtisches 1 versetzt angeordnet sind.

Die Auftragseinrichtung 7 weist mehrere Gleitführungen auf, an denen Schlitten 18, 19 bzw. 28 mittels Spindelantrieben 21 bzw. 25 in unterschiedliche Höhen verfahrbar sind.

Wie in Fig. 2 zu erkennen ist, sind an den Schlitten 18 und 19 Gelenke ausgebildet, an denen eine Austragsdüse 9 bzw. eine kegelförmige Andruckrolle 11 schwenkbar gelagert sind. Das der Stabilisierung des Spießes 5 dienende Gegenlager 17 wird dagegen unabhängig von dem Schlitten 28 getragen.

Die Austragsdüse 9 ist über eine elastische Leitung 10 mit einer nicht dargestellten Förderschnecke oder dergleichen verbunden, die eine dosierte Zuführung des Hackfleisches ermöglicht. Das Auftragen des Hackfleisches erfolgt bei drehendem Spieß 5. Zur Erzielung einer gleichmäßigen Hackfleischschicht kann die Austragsdüse 9 mit Stellgliedern versehen sein, welche ein teilweises oder vollständiges Verschließen der Austragsdüsenöffnung ermöglichen.

Die Durchmesser der herzustellenden Döner können durch Verschwenken der Austragsdüse 9 und/oder durch Öffnen bzw. Verschließen der Austragsdüsenöffnung(en) variiert werden. Auf diese Weise können bei Bedarf Döner in unterschiedlichen Formen hergestellt werden.

Die der Auftragseinrichtung 7 gegenüberliegende Auflegeeinrichtung 6 weist ebenfalls eine Gleitführung auf, an der ein Schlitten 20 durch einen Spindelantrieb 22 in im wesentlichen vertikaler Richtung verfahrbar ist. An dem Schlitten 20 ist eine zweiteilige Auflegescheibe 15 mit einer Ausnehmung 16 befestigt. Die Scheibe 15 ist mit einem nicht näher dargestellten Mechanismus versehen, durch den die beiden Hälften der Scheibe 15 schnell auseinander bewegt werden können, so daß ein auf der Scheibe 15 befindliches Stück Scheibenfleisch 23 auf eine darunter liegende Hackfleischschicht fällt.

Die Funktionsweise der dargestellten Vorrichtung ist folgende:

Zunächst wird von der Auflegeeinrichtung 6 an dem dort positionierten Spieß 4 bzw. 5 eine oder mehrere Lagen Scheibenfleisch 23 aufgelegt. Danach wird die kreisförmige Platte 3 des Drehtisches 1 um 180° gedreht und der betreffende Spieß an der Auftragseinrichtung 7 positioniert.

Zur Stabilisierung des so positionierten Spießes 5 wird das Gegenlager 17 mit dessen oberen Ende gekoppelt. Sodann wird der Spieß 5 durch den Drehantrieb 14 in Drehung versetzt und über die Auftragsdüse 9 eine dosierte Menge Hackfleisch 24 auf das zuvor aufgelegte Scheibenfleisch aufgetragen.

Die aufgetragene Hackfleischmasse wird gleichzeitig oder anschließend mit der Andruckrolle glattgewalzt, um eine ausreichende Verdichtung der Hackfleischschicht zu erreichen. Zur Erzielung unterschiedlicher Gesamtschichtdicken kann das Hackfleisch 24 in mehreren Einzelschichten beziehungsweise mit mehreren Umdrehungen aufgetragen werden. Die Dosierung des Hackfleisches, die Drehzahl des Spießes 5 sowie die Andruckkraft der Andruckrolle 11 werden dabei in aufeinander abgestimmter Weise gesteuert.

Ein plastisches Herausfließen unterer Hackfleischschichten wird dadurch verhindert, daß die unteren Schichten mit relativ geringerer Schichtdicke auftragen werden. Mit zunehmender Höhe wird die Schichtdicke des Hackfleisches erhöht.

Zu betonen ist, daß die Spieße bei diesem Ausführungsbeispiel reine Drehbewegungen um die eigene Achse bzw. um die Achse des Drehtisches 1 vollführen. Bei diesem Ausführungsbeispiel findet keine Höhenverstellung der Spieße statt. Dagegen werden nur die Schlitten 18, 19, 20 bzw. 28 der Auftrags- bzw. Auflegeeinrichtung 7 bzw. 6 , welche eine wesentlich geringere Masse aufweisen, in der Höhe verstellt. Dieses Konzept erfordert einen wesentlichen geringeren Energieaufwand, ermöglicht kleinere Verstellantriebe und erlaubt hohe Taktzahlen.

Nachdem die aufgetragene Hackfleischschicht ausreichend verdichtet ist, wird die Platte 3 des Drehtisches 1 um 180° weitergedreht und an der Auflegeeinrichtung 6 ein weiteres Stück Scheibenfleisch aufgelegt. Die Zuführung des Scheibenfleisches 23 auf die zweiteilige Auflegescheibe 15 erfolgt bei der hier dargestellten Vorrichtung manuell. Es kann bei Bedarf aber auch ein Magazin vorgesehen werden, aus dem das Scheibenfleisch 23 scheibenweise der Auflegescheibe 15 zugeführt werden kann.

Sobald eine erste Lage Scheibenfleisch auf einem der Spieße 4 bzw. 5 aufgelegt ist und dieser um 180° an der gegenüberliegenden Auftragseinrichtung positioniert ist, kann an dem zweiten Spieß 4, der dann an der Auflegeeinrichtung 6 positioniert ist, ein weiteres Stück Scheibenfleisch aufgelegt werden. Somit liegt eine Parallelisierung der einzelnen Herstellungsschritte vor.

Die vorliegende Erfindung ist nicht auf das vorstehend beschriebene Ausführungsbeispiel beschränkt. Vielmehr ist eine Anzahl von Varianten denkbar, die von der dargestellten Lösung auch bei grundsätzlich anders gearteten Ausführungen Gebrauch machen.

### Bezugszeichenliste

- 1: Positioniereinrichtung (Drehtisch)
- 2: Drehachse des Drehtisches
- 3: Kreisplatte
- 4: Spieß
- 5: Spieß
- 6: Auflegeeinrichtung
- 7: Auftragseinrichtung
- 8: Grundplatte
- 9: Austragsdüse
- 10: Elastische Leitung
- 11: Andruckrolle
- 12: Befestigungselement
- 13: Gewichtssensor
- 14: Schneckenantrieb
- 15: Zweiteilige Auflegescheibe
- 16: Ausnehmung
- 17: Gegenlager
- 18: Schlitten der Austragsdüse
- 19: Schlitten der Andruckrolle
- 20: Schlitten der zweiteiligen Scheibe
- 21: Antrieb zur Positionierung der Austragsdüse
- 22: Antrieb zur Positionierung der zweiteiligen Scheibe
- 23: Scheibenfleisch
- 24: Hackfleischschicht
- 25: Antrieb zur Positionierung des Gegenlagers
- 26: Halterung
- 27: Halterung
- 28: Schlitten des Gegenlagers

## Patentansprüche

1. Vorrichtung zur Herstellung von aus Scheibenfleisch und Hackfleischschichten bestehenden Döner, gekennzeichnet durch eine Positioniereinrichtung (1) mit mindestens zwei, die Döner durchdringenden Spießen (4, 5), eine Auflegeeinrichtung (6) zum Auflegen des Scheibenfleisches (23) und eine Auftragseinrichtung (7) zum Auftragen der Hackfleischschichten (24), wobei die Spieße (4, 5) wechselweise mittels der Positioniereinrichtung (1) von der Auflegeeinrichtung (6) zur Auftragseinrichtung (7) und umgekehrt bewegbar sind.

2. Vorrichtung nach Anspruch 1, dadurch gekennzeichnet, daß die Positioniereinrichtung ein Drehtisch (1) ist, der mindestens zwei im wesentlichen vertikal und um 180° bezogen auf die Drehachse (2) des Drehtisches versetzt angeordnete Spieße (4, 5) trägt.

3. Vorrichtung nach Anspruch 1 oder 2, dadurch gekennzeichnet, daß die Auftragseinrichtung (7) mit mindestens einer höhenverstellbaren Austragsdüse (9) ausgestattet ist, die über eine elastische Leitung (10) mit einer Förderschnecke verbindbar ist, und mindestens ein Drehantrieb (14) zum Drehen des an der Auftragseinrichtung (7) positionierten Spießes (5) samt Döner vorgesehen ist.

4. Vorrichtung nach Anspruch 3, dadurch gekennzeichnet, daß die Auftragseinrichtung (7) mit einer höhenverstellbaren, auf aufgetragendem Hackfleisch abrollbaren Andruckrolle (11) versehen ist.

5. Vorrichtung nach Anspruch 4, dadurch gekennzeichnet, daß die Andruckkraft der Andruckrolle (11) einstellbar ist.

6. Vorrichtung nach einem der vorstehenden Ansprüche 3 bis 5, dadurch gekennzeichnet, daß an der Auftragseinrichtung (7) ein höhenverstellbares, mit dem positionierten Spieß (5) koppelbares Gegenlager (17) vorgesehen ist.

7. Vorrichtung nach einem der Ansprüche 3 bis 6, dadurch gekennzeichnet, daß die Öffnung der Austragsdüse (9) bzw. -düsen durch Stellglieder teilweise oder vollständig verschließbar ist.

8. Vorrichtung nach einem der vorstehenden Ansprüche, dadurch gekennzeichnet, daß die Spieße (4, 5) an der Positioniereinrichtung (1) jeweils in ein drehbares Befestigungselement (17) einsetzbar sind, das mit einem Gewichtssensor (13) zur Erfassung des Dönergewichts gekoppelt ist.

9. Vorrichtung nach einem der vorstehenden Ansprüche, dadurch gekennzeichnet, daß die Auflegeeinrichtung (6) eine zweiteilige Auflegescheibe (15) mit einer Ausnehmung (16) aufweist, die entlang eines positionierten Spießes (4) verfahrbar ist, wobei auf der Scheibe (15) befindliches Scheibenfleisch in unterschiedlichen Höhen des Spießes (4) durch schnelles Öffnen der zweiteiligen Scheibe (15) auflegbar ist.

10. Vorrichtung nach einem der vorstehenden Ansprüche, dadurch gekennzeichnet, daß ein Magazin vorgesehen ist, mit dem das Scheibenfleisch (23) scheibenweise der Auflegeeinrichtung (6) aufgebbar ist.

11. Vorrichtung nach einem der Ansprüche 3 bis 10, dadurch gekennzeichnet, daß eine Regelung vorgesehen ist, welche die Drehgeschwindigkeit der Spieße (4, 5), die Umdrehungszahl der Spieße (4, 5), den Hackfleischmassenstrom und/oder die Andruckkraft der Andruckrolle (11) mit vorgebbaren Soll-Werten vergleicht und bei einer Abweichung den Soll-Werten anpaßt.

12. Verfahren zur Herstellung von Döner, gekennzeichnet durch folgende Schritte:
a) Auflegen einer oder mehrerer Lagen Scheibenfleisch (23) an einem ersten Spieß (4) mittels einer Auflegeeinrichtung (6),
b) Positionieren des Spießes (4) an einer Auftragseinrichtung (7) zum Auftragen von Hackfleisch,
c) Auftragen einer oder mehrerer Hackfleischschichten (24) mittels der Auftragseinrichtung (7) unter Drehung des Spießes (4 oder 5)
d) Auflegen einer oder mehrerer Lagen Scheibenfleisch (23) an einem zweiten Spieß (4 oder 5) mittels der Auflegeeinrichtung (6),
e) abwechselndes Positionieren der Spieße (4 und 5) an der Auflegeeinrichtung (6) beziehungsweise an der Auftragseinrichtung (7), und
f) Wiederholen der Schritte a) beziehungsweise c) bis zur Fertigstellung je eines Döners auf jedem der Spieße (4 und 5).

13. Verfahren nach Anspruch 12, dadurch gekennzeichnet, daß die Schichthöhe des Hackfleisches mit zunehmender Höhe des Döners erhöht wird.

14. Verfahren nach Anspruch 13, dadurch gekennzeichnet, daß die Erhöhung der Schichthöhe durch Auftragen mehrerer Einzelschichten unter Drehung des jeweilgen Spießes (4 oder 5) erfolgt.

15. Verfahren nach einem der Ansprüche 12 bis 14, dadurch gekennzeichnet, daß die aufgetragene Hackfleischmasse mit einer Andruckrolle (11) verdichtet wird.

16. Verfahren nach Anspruch 15, dadurch gekennzeichnet, daß die Dosierung des Hackfleisches, die Drehzahl des Spießes (4 oder 5) und/oder die Andruckkraft der Andruckrolle (11) in aufeinander abgestimmter Weise gesteuert werden.
